# EUROPÄISCHE PATENTSCHRIFT

(11) **EP 3 825 722 B1**
(45) Veröffentlichungstag und Bekanntmachung des Hinweises auf die Patenterteilung: **11.05.2022**
(21) Anmeldenummer: 19210806.6
(22) Anmeldetag: 22.11.2019
(51) Int. Cl.: G01S 7/481, G01S 7/497, G01S 17/42, G01S 17/86, G01S 17/89, G01C 15/00

(54) **LASERSCANNER ZUR FAHRZEUGGESTÜTZTEN VERMESSUNG EINER UMGEBUNG**
LASER SCANNER FOR THE VEHICLE-BASED MEASUREMENT OF AN ENVIRONMENT
BALAYEUR LASER POUR LA MESURE EMBARQUÉE D'UN ENVIRONNEMENT

(43) Veröffentlichungstag der Anmeldung: 26.05.2021
(73) Patentinhaber: RIEGL Laser Measurement Systems GmbH, 3580 Horn (AT)
(72) Erfinder: REICHERT, Rainer, 3580 Horn (AT); RIEGER, Peter, 3824 Grossau (AT); PFENNIGBAUER, Martin, 3430 Tulln (AT)
(74) Vertreter: Weiser & Voith Patentanwälte Partnerschaft

(56) Entgegenhaltungen:
- EP-A1- 1 986 032
- WO-A1-2005/114295
- US-B1- 6 822 742

## Beschreibung

Die vorliegende Erfindung betrifft einen Laserscanner zur fahrzeuggestützten Vermessung einer Umgebung durch Laufzeitmessung unter Ermittlung eines 3D-Modells der Umgebung aus Entfernungsmesspunkten. Der Laserscanner ist an einem Nick-, Roll- und Gierachsen aufweisenden Fahrzeug verankerbar und hat einen Lasersender zum Aussenden eines Sendestrahls im Wesentlichen quer zur Rollachse, einen Laserempfänger zum Empfangen des von der Umgebung reflektierten Sendestrahls als Empfangsstrahl und eine Strahlablenkeinrichtung, welche eine erste und eine zweite optisch brechende Keilscheibe im Strahlengang des Sende- und des Empfangsstrahls, einen ersten und einen zweiten Antrieb und eine Steuereinheit für die Antriebe umfasst, wobei die erste Keilscheibe vom ersten Antrieb um eine erste Antriebsachse und die zweite Keilscheibe vom zweiten Antrieb um eine zweite Antriebsachse antreibbar ist.

Laserscanner zur fahrzeuggestützten Umgebungsvermessung werden z.B. terrestrisch zum Scannen von Gebäuden, Straßenzügen, Tunnels, Bergwerken, Schienensträngen, usw., luftgestützt zur Vermessung von Landschaften, oder seegestützt zur Vermessung des See- oder Meeresgrundes, von Küstenlinien od.dgl. eingesetzt. Der meist gepulste oder modulierte Sendestrahl wird dabei von der Strahlablenkeinrichtung aufgefächert, um eine gewünschte Abtastbreite bzw. -auflösung zu erzielen, und abtastend über die zu vermessende Umgebung geführt ("gescannt").

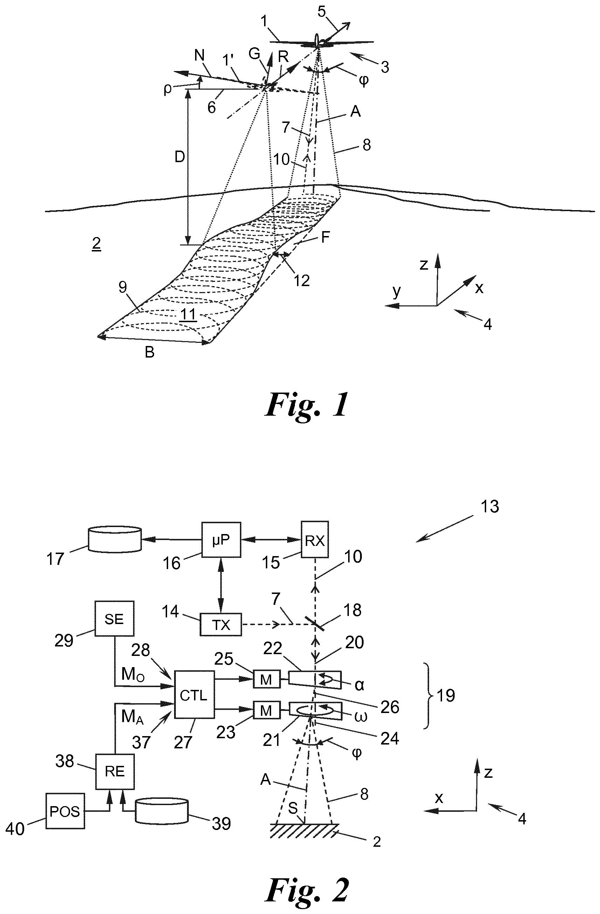

Fig. 1 illustriert eine solche Situation: Ein Fahrzeug (hier: ein Luftfahrzeug) 1 trägt zur Vermessung einer Umgebung (hier: einer Landschaft) 2 einen nach unten gerichteten Laserscanner 3. Das Fahrzeug 1 hat eine fahrzeugfeste Nick- bzw. Querachse N, dazu normale Roll- bzw. Längsachse R und zu diesen beiden normale Gier- bzw. Hochachse G. Die Umgebung 2 hat ein festes Koordinatensystem 4, dessen x-Achse zur einfacheren Erläuterung in der - hier horizontalen - Fortbewegungsrichtung 5 des Fahrzeugs 1 ausgerichtet ist und zusammen mit der dazu normalen y-Achse eine horizontale Ebene (die "Horizontale") 6 aufspannt, zu welcher die z-Achse des Koordinatensystems 4 normal steht.

Der Laserscanner 3 erzeugt einen gepulsten oder modulierten Sendestrahl 7, welcher von einer schwingenden oder rotierenden Optik - z.B. kegelmantelsegmentförmig, hier von einer kontinuierlich rotierenden optisch brechenden Keilscheibe (in Fig. 1 nicht sichtbar) kegelmantelförmig - aufgefächert wird. Der solcherart erzeugte Abtastkegel 8 mit Kegelachse A und Öffnungswinkel ϕ erzeugt im Zusammenwirken mit der Fortbewegung des Fahrzeugs 1 in seiner Fortbewegungsrichtung 5 ein Abtastmuster 9 in Form einer verlängerten Zykloide auf der passierten Umgebung 2. Der an der Umgebung 2 reflektierte Sendestrahl 7 wird als Empfangsstrahl 10 im Laserscanner 3 empfangen und nach Laufzeit und Aussenderichtung ausgewertet, woraus Entfernungsmesspunkte und daraus eine Abtastpunktewolke (ein "3D-Modell") der Umgebung 2 ermittelt werden. Die Umgebung 2 wird dazu meist zeilenweise in Scanstreifen 11 der Breite B gescannt. Die Scanstreifenbreite B hängt einerseits vom Kegelöffnungswinkel ϕ und andererseits vom Abstand D des Laserscanners 3 zu der Umgebung 2 ab.

Im Beispiel der Fig. 1 verläuft der Scanstreifen 11 nicht durchgängig gerade, sondern hat in einem Teilbereich einen Versatz 12 infolge einer Rollbewegung des Luftfahrzeugs 1 um einen Rollwinkel ρ gegenüber der Horizontalen 6 um seine Rollachse R, versinnbildlicht durch das strichlierte Luftfahrzeug 1' in Fig. 1. Daraus verbleibt eine gegenüber einem geraden Scanstreifenverlauf ungescannte Fläche F der Umgebung 2. Um solchen ungescannten Flächen F vorzubeugen, ist es bekannt, den Laserscanner 3 über eine gyroskopisch stabilisierte Montage am Fahrzeug 1 zu verankern, sodass die Ausrichtung des Laserscanners 3 gegenüber der Horizontalen 6 und/oder der Nordrichtung im Wesentlichen konstant bleibt, oder den Laserscanner 3 mit zusätzlichen beweglichen Ablenkspiegeln auszustatten, um Bewegungen des Fahrzeugs 1 um seine Roll-, Nick- und/oder Gierachsen R, N, G dynamisch auszugleichen. Ferner werden entsprechende Überlappungen benachbarter Scanstreifen 11 beim Scannen der Umgebung 2 vorsorglich eingeplant. Diese Maßnahmen führen jedoch zu erhöhtem Gewicht und komplexerem Aufbau des Laserscanners und/oder zu höherem Scanaufwand.

Eine variable Scanstreifenbreite B ist z.B. mit einem aus der US 10 295 659 B2 bekannten, sogenannten "Risley-Scanner" erzielbar. Dabei erfolgt das kegelmantelförmige Auffächern mithilfe zweier optisch brechender, mit gleicher Drehzahl rotierender Keilscheiben im Strahlengang. Durch Variieren eines Winkelversatzes zwischen den beiden Keilscheiben kann der Öffnungswinkel des Abtastkegels an die Erfordernisse angepasst und dadurch die Messpunktdichte der Abtastpunktewolke bzw. die Scanstreifenbreite des Laserscanners vom Abstand des Laserscanners zur Umgebung unabhängig gemacht werden. Eine Anpassung insbesondere an die Fahr- bzw. Fluglage des Fahrzeugs erlaubt diese Lösung jedoch nicht.

Optische Scanner mit mehreren, in Serie geschalteten rotierenden Keilscheiben im Strahlengang sind in der EP 1 986 032 A1 beschrieben. Dokument US 6 822 742 offenbart relevanten Stand der Technik.

Die Erfindung setzt sich zum Ziel, einen Laserscanner zu schaffen, welcher bei einfachem Aufbau hohe Flexibilität und Effizienz bei der fahrzeuggestützten Vermessung einer Umgebung ermöglicht.

Dieses Ziel wird erfindungsgemäß mit einem Laserscanner der eingangs genannten Art erreicht, welcher sich dadurch auszeichnet, dass die Steuereinheit einen Signaleingang für ein Messsignal über die Orientierung des Laserscanners in der Umgebung hat und dazu ausgebildet ist, aus dem Orientierungsmesssignal den Rollwinkel des Laserscanners um die Rollachse gegenüber der Horizontalen zu ermitteln und den ersten und zweiten Antrieb derart zu steuern, dass die erste Keilscheibe mit einer vorgegebenen Winkelgeschwindigkeit um die erste Antriebsachse rotiert und die zweite Keilscheibe in eine den ermittelten Rollwinkel kompensierende Winkellage um die zweite Antriebsachse schwenkt.

Die erste Keilscheibe fächert dabei durch ihre Rotation den Sendestrahl zum Abtastkegel auf, welcher durch das Schwenken der zweiten Keilscheibe zur Kompensation des ermittelten Rollwinkels entgegen der Rollbewegung des Fahrzeugs geneigt wird. Dadurch wird auf einfache Weise ein Rollen des Fahrzeugs, z.B. infolge von Seitenwind bei einem Luftfahrzeug, infolge von Wellen bei einem Wasserfahrzeug bzw. infolge von Fahrbahnunebenheiten bei einem Landfahrzeug, kompensiert. Der Laserscanner bietet mit seiner einfach aufgebauten und besonders einfach steuerbaren Strahlablenkeinrichtung hohe Flexibilität im Alltagseinsatz und erleichtert ein effizientes Scannen der Umgebung mit erheblich geringeren Überlappungen benachbarter Scanstreifen.

Als "Keilscheibe" wird in diesem Zusammenhang ein Prisma verstanden, welches im Strahlengang derartig drehbar ist, dass der Sendestrahl (und ebenso der Empfangsstrahl) beim Durchtritt durch das Prisma abgelenkt wird. Es versteht sich, dass die erste und die zweite Keilscheibe in beliebiger Reihenfolge im Strahlengang angeordnet sein können. Die Formulierung "im Wesentlichen quer zur Rollachse" schließt einerseits Abweichungen von der Querrichtung infolge der Ablenkung des Sendestrahls durch die Strahlablenkeinrichtung und andererseits in manchen Fällen gewünschte geringfügige Abweichungen, z.B. geringes Neigen des Abtastkegels in Fortbewegungsrichtung des Fahrzeugs, od.dgl., mit ein.

In einer vorteilhaften Ausführungsform des Laserscanners schließt der Sendestrahl vor Eintritt in die Strahlablenkeinrichtung einen spitzen Winkel mit zumindest einer der Antriebsachsen ein. Auf diese Weise kann ein manchmal unerwünschtes Neigen des Sendestrahls um die Nickachse infolge der Brechung an der zweiten Keilscheibe teilweise oder gänzlich kompensiert werden, sodass der Abtastkegel im Wesentlichen quer zur Rollachse des Fahrzeugs neigbar bleibt.

Ein besonders einfacher Aufbau der Strahlablenkeinrichtung ergibt sich, wenn die Antriebsachsen zusammenfallen.

Die erste und zweite Keilscheibe können in ihren optischen Eigenschaften identisch sein. In einer vorteilhaften Variante sind hingegen die erste und die zweite Keilscheibe verschieden stark optisch brechend. Dies ist durch unterschiedliche Keilwinkel und/oder durch unterschiedliche optische Brechungsindizes der ersten und zweiten Keilscheibe erzielbar. Auf diese Weise ist die Strahlenablenkeinrichtung besonders flexibel an die Erfordernisse anpassbar, indem in ein und dieselbe Strahlablenkeinrichtung verschieden stark optisch brechende Keilscheiben z.B. wechselweise eingesetzt werden.

In einer günstigen Ausführungsvariante erstreckt sich ein Winkelbereich, innerhalb dessen die zweite Keilscheibe um die zweite Antriebsachse schwenkbar ist, beiderseits einer vorgegebenen Nennwinkellage der zweiten Keilscheibe über jeweils weniger als 30 Grad, bevorzugt jeweils 15 Grad. Dies bewirkt, dass beim Neigen des Abtastkegels um die Rollachse durch Schwenken der zweiten Keilscheibe das damit unvermeidlich einhergehende Neigen des Abtastkegels um die Nickachse sehr gering und deshalb in vielen Anwendungen vernachlässigbar bleibt.

Besonders vorteilhaft ist es, wenn die Strahlablenkeinrichtung im Strahlengang ferner eine dritte optisch brechende Keilscheibe umfasst, welche von einem dritten Antrieb um eine dritte Antriebsachse antreibbar ist, und die Steuereinheit ferner dazu ausgebildet ist, aus dem Orientierungsmesssignal den Nickwinkel des Laserscanners um die Nickachse gegenüber der Horizontalen zu ermitteln und den dritten Antrieb derart zu steuern, dass die dritte Keilscheibe in eine den ermittelten Nickwinkel kompensierende Winkellage um die dritte Antriebsachse schwenkt. Insbesondere bei Fahrzeugen, welche im Wesentlichen nach unten (oder oben) scannen, z.B. die Landschaft scannende Luftfahrzeuge oder den Meeresgrund scannende Wasserfahrzeuge, ist eine zusätzliche Kompensation des Nickwinkels hilfreich. Der Laserscanner ist dadurch noch flexibler einsetzbar. Roll- und Nickkompensation können dabei voneinander völlig unabhängig sein oder kombiniert werden.

Wie bei der Rollkompensation ist es auch bei der Nickkompensation günstig, wenn sich ein Winkelbereich, innerhalb dessen die dritte Keilscheibe um die dritte Antriebsachse schwenkbar ist, beiderseits einer vorgegebenen Nennwinkellage der dritten Keilscheibe über jeweils weniger als 30 Grad, bevorzugt jeweils 15 Grad, erstreckt. Dies bewirkt, dass bei einem Neigen des Abtastkegels um die Nickachse durch Schwenken der dritten Keilscheibe das damit unvermeidlich einhergehende Neigen des Abtastkegels um die Rollachse sehr gering und deshalb in vielen Anwendungen vernachlässigbar bleibt.

Besonders günstig ist es, wenn die Steuereinheit ferner dazu ausgebildet ist, den dritten Antrieb in Abhängigkeit von der Winkellage der zweiten Keilscheibe zu steuern. Dadurch wird eine kombinierte Roll- und Nickkompensation bzw. ein Neigen des Abtastkegels in jede Richtung ermöglicht. Sind dabei sowohl die zweite als auch die dritte Keilscheibe um jeweils 180 Grad beiderseits der jeweiligen Nennwinklage schwenkbar, kann der Abtastkegel in jede Richtung völlig frei und stufenlos geneigt und sogar sein Neigen in jede Richtung durch kollektives Schwenken der zweiten und dritten Kreisscheibe verstärkt oder durch gegengleiches Schwenken der zweiten und dritten Kreisscheibe abgeschwächt werden. Dadurch kann die Kegelachse über einen weiten Orientierungsbereich des Laserscanners z.B. lotrecht gehalten werden.

In einer weiteren vorteilhaften Ausführungsform umfasst die Strahlablenkeinrichtung im Strahlengang eine vierte optisch brechende Keilscheibe, welche von einem vierten Antrieb um eine vierte Antriebsachse antreibbar ist, und ist die Steuereinheit ferner dazu ausgebildet, den vierten Antrieb derart zu steuern, dass die vierte Keilscheibe unter einem vorgegebenen Winkelversatz gegenüber der ersten Keilscheibe mit der vorgegebenen Winkelgeschwindigkeit um die vierte Antriebsachse rotiert. Auf diese Weise ist der Öffnungswinkel des Abtastkegels durch Vorgabe des Winkelversatzes einstellbar. Die Strahlablenkeinrichtung kann die vierte Keilscheibe anstelle oder zusätzlich zu der dritten Keilscheibe umfassen.

Besonders günstig ist dabei, wenn die Steuereinheit einen weiteren Signaleingang für ein Messsignal über den Abstand des Laserscanners zu der Umgebung hat und dazu ausgebildet ist, aus dem Abstandsmesssignal den Winkelversatz zu ermitteln und vorzugeben. Dies ermöglicht die Vermessung der Umgebung mit gleichbleibender Auflösung, d.h. gleicher Scanstreifenbreite, unabhängig vom Abstand des Laserscanners zur Umgebung; auf diese Weise kann eine genau vordefinierte, minimale Überlappung benachbarter Scanstreifen sichergestellt werden.

Die Erfindung wird nachstehend anhand von in den beigeschlossenen Zeichnungen dargestellten Ausführungsbeispielen näher erläutert. In den Zeichnungen zeigen:
Fig. 1 ein Luftfahrzeug mit einem Laserscanner gemäß dem Stand der Technik beim Vermessen einer Umgebung in einer schematischen Perspektivansicht;
Fig. 2 einen Laserscanner mit einer erfindungsgemäßen Strahlablenkeinrichtung und eingezeichnetem Sendestrahlverlauf in einem schematischen Blockschaltbild;
die Fig. 3a und 3b eine erste Ausführungsform der Strahlablenkeinrichtung des Laserscanners von Fig. 2 mit zwei koaxialen Keilscheiben und eingezeichnetem Sendestrahlverlauf in einer Seitenansicht (Fig. 3a) bzw. Draufsicht (Fig. 3b);
die Fig. 4a und 4b eine zweite Ausführungsform der Strahlablenkeinrichtung von Fig. 2 mit nicht-koaxialen Keilscheiben und eingezeichnetem Sendestrahlverlauf in einer Seitenansicht (Fig. 4a) bzw. Draufsicht (Fig. 4b);
die Fig. 5a, 5b das Prinzip einer dritten Ausführungsform der Strahlablenkeinrichtung von Fig. 2 schematisch vereinfacht mit zwei Keilscheiben und eingezeichnetem Sendestrahlverlauf in einer Seitenansicht (Fig. 5a) bzw. Draufsicht (Fig. 5b);
die Fig. 6a und 6b die Ausführungsform der Strahlablenkeinrichtung der Fig. 5a und 5b im Detail mit drei Keilscheiben und eingezeichnetem Sendestrahlverlauf in einer Seitenansicht (Fig. 6a) bzw. Draufsicht (Fig. 6b);
die Fig. 7a und 7b eine vierte Ausführungsform der Strahlablenkeinrichtung von Fig. 2 mit drei Keilscheiben und eingezeichnetem Sendestrahlverlauf in einer Seitenansicht (Fig. 7a) bzw. Draufsicht (Fig. 7b); und
die Fig. 8a und 8b eine fünfte Ausführungsform der Strahlablenkeinrichtung des Laserscanners von Fig. 2 mit vier Keilscheiben und eingezeichnetem Sendestrahlverlauf in einer Seitenansicht (Fig. 8a) bzw. Draufsicht (Fig. 8b).

Auf der Grundlage der obigen Ausführungen zu Fig. 1 und dem darin dargestellten, im Luftfahrzeug 1 mitgeführten Laserscanner 3 gemäß dem Stand der Technik zum Vermessen der Umgebung 2 werden im Folgenden anhand der in den Fig. 2 und 3a bis 8b gezeigten Beispiele verschiedene Ausführungsformen eines erfindungsgemäßen Laserscanners 13 beschrieben. Gleiche Bezugszeichen bezeichnen dabei gleiche Elemente wie in Fig. 1.

Es versteht sich, dass der Laserscanner 13 an verschiedenartigen Fahrzeugen 1 verankerbar ist, z.B. an einem Luftfahrzeug, einem Raumfahrzeug, einem Landfahrzeug, insbesondere Straßen- oder Schienenfahrzeug, oder einem Wasserfahrzeug.

Gemäß Fig. 2 hat der Laserscanner 13 einen Lasersender 14, welcher den Sendestrahl 7 im Wesentlichen quer zur Rollachse R des Fahrzeugs 1 aussendet. Ferner hat der Laserscanner 13 einen Laserempfänger 15, welcher den von der Umgebung 2 reflektierten Sendestrahl 7 als Empfangsstrahl 10 empfängt, und eine Recheneinheit 16, welche Informationen über den Sendestrahl 7 und den Empfangsstrahl 10 - z.B. die Laufzeit und Ausrichtung, den aus diesen Informationen gleich selbst errechneten Abstand D zur Umgebung 2 oder ein daraus errechnetes Geländemodell - in einem optionalen Speicher 17 ablegt. Die Recheneinheit 16 oder eine andere Steuerung kann in dem Fachmann bekannter Weise den Lasersender 14 und/oder den Laserempfänger 15 ansteuern. Im Beispiel von Fig. 2 umfasst der Laserscanner 13 ferner einen teildurchlässigen Spiegel 18 zur Trennung von Sende- und Empfangsstrahl 7, 10, wie im Stand der Technik bekannt.

Der Sendestrahl 7 wird über eine Strahlablenkeinrichtung 19 des Laserscanners 13 ausgesandt und der Empfangsstrahl 10 - nach Reflexion an der Umgebung 2 - darüber zurückempfangen. Die Strahlablenkeinrichtung 19 hat im Strahlengang 20 des Sende- und Empfangsstrahls 7, 10 eine erste optisch brechende Keilscheibe 21 und eine zweite optisch brechende Keilscheibe 22. Die Strahlablenkeinrichtung 19 umfasst ferner einen ersten Antrieb 23, welcher die erste Keilscheibe 21 um eine erste Antriebsachse 24 antreibt; ebenso umfasst die Strahlablenkeinrichtung 19 einen zweiten Antrieb 25, welcher die zweite Keilscheibe 22 um eine zweite Antriebsachse 26 antreibt, und eine Steuereinheit 27 für die Antriebe 23, 25.

Die Steuereinheit 27 hat einen Signaleingang 28 für ein Messsignal Mₒ, welches die Orientierung des Laserscanners 13 in der Umgebung 2, d.h. gegenüber dem ortsfesten Koordinatensystem 4 der Umgebung 2, enthält. Dazu kann beispielsweise der Laserscanner 13 einen eigenen Orientierungssensor 29 enthalten oder das Orientierungsmesssignal Mₒ von einem Fahrzeugsensor od.dgl. empfangen, an welchen der Laserscanner 13 drahtlos oder drahtgebunden angeschlossen ist. Aus dem Orientierungsmesssignal Mₒ ermittelt die Steuereinheit 27 den Rollwinkel ρ des Fahrzeugs 1 und somit des Laserscanners 13, wenn dieser fix am Fahrzeug 1 verankert ist, um die Rollachse R des Fahrzeugs 1 gegenüber der Horizontalen 6 (Fig. 1). Ist der Laserscanner 13 am Fahrzeug 1 beweglich verankert, fließt diese Bewegung in die Ermittlung bzw. in das Orientierungsmesssignal Mₒ mit ein. Optional enthält das Orientierungsmesssignal Mₒ direkt den Rollwinkel ρ.

Die Steuereinheit 27 steuert den ersten Antrieb 23 so, dass dieser zur Erzeugung des Abtastkegels 8 durch optische Brechung des Sendestrahls 7 die erste Keilscheibe 21 mit einer vorgegebenen Winkelgeschwindigkeit ω um die erste Antriebsachse 24 rotiert; z.B. gibt die Steuereinheit 27 die Winkelgeschwindigkeit ω vor oder aktiviert den mit fester Winkelgeschwindigkeit ω rotierenden ersten Antrieb 23. Den zweiten Antrieb 25 steuert die Steuereinheit 27 derart, dass die zweite Keilscheibe 22 in eine vom ermittelten Rollwinkel ρ abhängige Winkellage α um die zweite Antriebsachse 26 schwenkt, sodass der ermittelte Rollwinkel ρ durch die genannte Winkellage α kompensiert wird, wie im Folgenden erläutert wird.

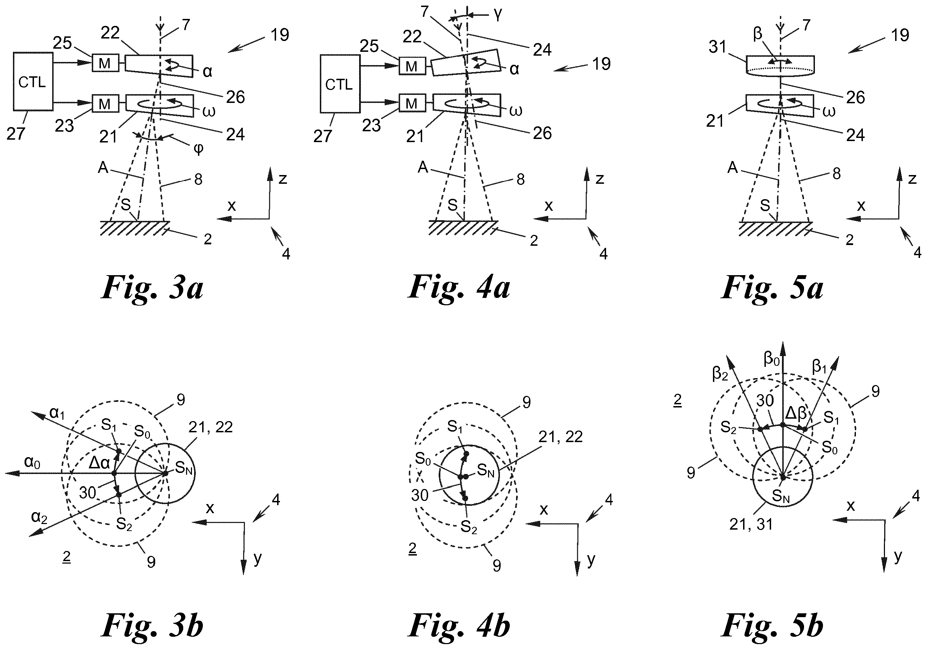

Fig. 3a zeigt die in Fig. 2 dargestellte Variante der Strahlablenkeinrichtung 19 mit erster und zweiter Keilscheibe 21, 22, deren Antriebsachsen 24, 26 hier mit dem einfallenden Sendestrahl 7 zusammenfallen. Der daraus resultierende Abtastkegel 8 mit seiner Kegelachse A ergibt bei Stillstand des Fahrzeugs 1, welcher hier zwecks vereinfachter Erläuterung angenommen wurde, das in Fig. 3b dargestellte Abtastmuster 9 auf der Umgebung 2. Infolge der optischen Brechung des Sendestrahls 7 an der zweiten Keilscheibe 22 wird der Abtastkegel 8 geneigt und dadurch ein Schnittpunkt S seiner Kegelachse A mit der Umgebung 2 aus dem Nadir S_{N} in Richtung der Winkellage α der zweiten Keilscheibe 22 verschoben. Ist die zweite Keilscheibe 22 in eine Nennwinkellage α₀ geschwenkt (hier: normal zur Nickachse N und parallel zur Rollachse R des Fahrzeugs 1, wobei die letztere in diesem Beispiel zur x-Achse des Koordinatensystems 4 parallel ist), ergibt sich um den resultierenden Schnittpunkt S₀ eine annähernd kreisförmige Kegelschnittlinie mit der Umgebung 2 als Abtastmuster 9.

Wird die zweite Keilscheibe 22 mithilfe des von der Steuereinheit 27 gesteuerten zweiten Antriebs 26 innerhalb eines Winkelbereichs Δα in eine andere Winkellage, z.B. eine Winkellage α₁ oder einer Winkellage α₂, um die zweite Antriebsachse 26 geschwenkt, so neigt sich der Abtastkegel 8 im Wesentlichen quer zur Rollachse R um diese, sodass sich der Schnittpunkt S entsprechend in eine mit S₁ bzw. S₂ bezeichnete Lage entlang eines Kreisbogens 30 verschiebt. Wieder ergibt sich um jeden Schnittpunkt S₁ bzw. S₂ (bzw. um jeden am Kreisbogen 30 liegenden Schnittpunkt S) eine annähernd kreisförmige Kegelschnittlinie als Abtastmuster 9. Dadurch wirkt das vom Orientierungssignal Mₒ abhängige Schwenken der zweiten Keilscheibe 22 einem Versatz 12 und somit dem Rollwinkel ρ des Fahrzeugs 1 entgegen.

Fig. 4a zeigt eine zweite Ausführungsform der Strahlablenkeinrichtung 19, bei welcher zusätzlich dem Neigen des Abtastkegels 8 um die Nickachse N bzw. dem Verschieben des Schnittpunktes S in Richtung der Winkellage α aus dem Nadir S_{N} entgegengewirkt wird. Dazu sind die erste und zweite Keilscheibe 21, 22 optional nicht koaxial, sondern schließen einen spitzen Winkel γ miteinander ein. Der Sendestrahl 7 ist in diesem Fall vor seinem Eintreten in die Strahlablenkeinrichtung 19 parallel zur zweiten Antriebsachse 26, d.h. er schließt mit der ersten Antriebsachse 24 denselben spitzen Winkel γ ein. Alternativ dazu könnten erste und zweite Keilscheibe 21, 22 auch hier koaxial sein und den Sendestrahl 7 vor seinem Eintreten in die Strahlablenkeinrichtung 19 den spitzen Winkel γ mit beiden Antriebsachsen 24, 26 einschließen. Gemäß Fig. 4b werden dadurch je nach spitzem Winkel γ die Schnittpunkte S₀, S₁, S₂ der Kegelachse A mit der Umgebung 2 und damit der Kreisbogen 30 und die Abtastmuster 9 gar nicht oder weniger weit in Richtung der Winkellage α aus dem Nadir S_{N} verschoben.

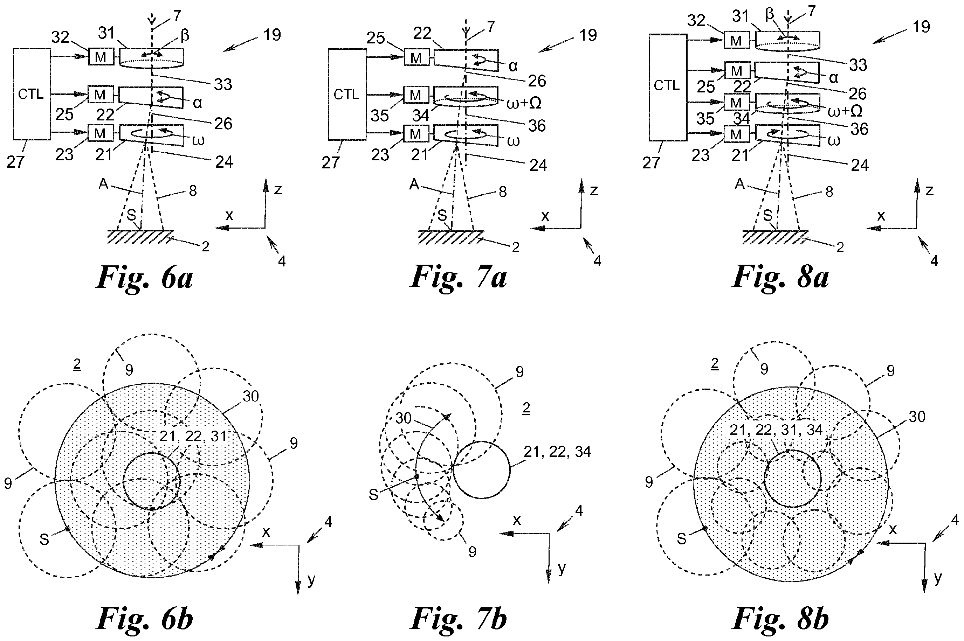

Anhand des Beispiels der Fig. 5a, 5b, 6a und 6b wird nun eine dritte Ausführungsform erläutert, bei welcher die Strahlablenkeinrichtung 19 im Strahlengang 20 ferner eine dritte optisch brechende Keilscheibe 31 umfasst. Die dritte Keilscheibe 31 treibt ein von der Steuereinheit 27 gesteuerter dritter Antrieb 32 (Fig. 6a) um eine dritte Antriebsachse 33 an. Dabei ist die Steuereinheit 27 dazu ausgebildet, aus dem Orientierungsmesssignal Mₒ auch den Nickwinkel (nicht dargestellt) des Laserscanners 13 um die Nickachse N des Fahrzeugs 1 gegenüber der Horizontalen 6 zu ermitteln. Optional enthält das Orientierungsmesssignal Mₒ direkt den Nickwinkel. Die Steuereinheit 27 steuert den dritten Antrieb 32 derart, dass die dritte Keilscheibe 31 in eine Winkellage β um die dritte Antriebsachse 33 schwenkt, sodass der ermittelte Nickwinkel kompensiert wird.

In den Fig. 5a und 5b ist diese dritte Ausführungsform zunächst schematisch vereinfacht dargestellt, indem insbesondere die zweite Keilscheibe 22 und ihre Brechung des Sendestrahls 7 nicht gezeigt sind. Die dritte Keilscheibe 31 hat optional eine Nennwinkellage β₀, aus welcher sie innerhalb eines Winkelbereichs Δβ z.B. in Winkellagen β₁ bzw. β₂ schwenkbar ist. Dadurch kann durch Neigen des Abtastkegels 8 um die Nickachse N des Fahrzeugs 1 ein allfälliger Nickwinkel des Fahrzeugs 1 kompensiert werden. Dies erzeugt, wie in Fig. 5b dargestellt, gegenüber der Darstellung in Fig. 3b um 90 Grad geschwenkte Abtastmuster 9.

Optional erstreckt sich der Winkelbereich Δα, innerhalb dessen die zweite Keilscheibe 22 um die zweite Antriebsachse 26 schwenkbar ist, beiderseits der Nennwinkellage α₀ der zweiten Keilscheibe 22 über jeweils weniger als 30 Grad, d.h. ± 30 Grad um die Nennwinkellage α₀, in einer Ausführungsvariante sogar nur über jeweils 15 Grad, d.h. ± 15 Grad. Auch der Winkelbereich Δβ, innerhalb dessen die dritte Keilscheibe 31 um die dritte Antriebsachse 33 schwenkbar ist, erstreckt sich optional beiderseits der vorgegebenen Nennwinkellage β₀ der dritten Keilscheibe 31 über jeweils weniger als 30 Grad, in einer optionalen Ausführungsform über jeweils 15 Grad. Zweiter und dritter Antrieb 25, 32 können dabei völlig unabhängig voneinander zur Kompensation von Rollwinkel ρ und Nickwinkel gesteuert werden.

Die Fig. 6a zeigt die dritte Ausführungsform der Strahlablenkeinrichtung 19 des Laserscanners 13 komplett mit erster, zweiter und dritter Keilscheibe 21, 22, 31. In diesem Beispiel steuert die Steuereinheit 27 den dritten Antrieb 32 in Abhängigkeit von der Winkellage α der zweiten Keilscheibe 22. Dabei erstrecken sich ferner optional die Winkelbereiche Δα, Δβ der zweiten und dritten Keilscheibe 22, 31 über jeweils bis zu 180 Grad beiderseits der jeweils vorgegebenen Nennwinkellagen α₀, β₀. Infolgedessen kann - wie in Fig. 6b durch den zum Kreis geschlossenen Kreisbogen 30 und die davon eingeschlossene gepunktete Kreisfläche versinnbildlicht - der Schnittpunkt S der Kegelachse A mit der Umgebung 2 jede Lage auf dem oder innerhalb des Kreises 30 einnehmen. Sind die Winkelbereiche Δα, Δβ kleiner, so sind auch die erreichbaren Lagen des Schnittpunkts S entsprechend eingeschränkt.

Die Beispiele der Fig. 7a bzw. 8a zeigen eine vierte bzw. eine fünfte Ausführungsform, bei welchen jeweils die Strahlablenkeinrichtung 19 im Strahlengang 20 eine "vierte" optisch brechende Keilscheibe 34 umfasst. Im Beispiel der Fig. 7a hat die Strahlablenkeinrichtung 19 keine "dritte" Keilscheibe 31, wogegen jene im Beispiel der Fig. 8a alle vier Keilscheiben 21, 22, 31, 34 umfasst. In beiden Fällen wird die vierte Keilscheibe 34 von einem vierten Antrieb 35 um eine vierte Antriebsachse 36 angetrieben. Die Steuereinheit 27 steuert den vierten Antrieb 35 derart, dass die vierte Keilscheibe 34 mit der vorgegebenen Winkelgeschwindigkeit ω der ersten Keilscheibe 21 und unter einem vorgegebenen Winkelversatz Ω gegenüber der ersten Keilscheibe 21 um die vierte Antriebsachse 36 rotiert.

Wie in Fig. 7b dargestellt ermöglicht die vierte Keilscheibe 34 im Vergleich zu der Variante von Fig. 3b eine vom Winkelversatz Ω abhängige Veränderung des Kegelöffnungswinkels ϕ und somit Abtastmuster 9 mit unterschiedlichen Durchmessern. Es sei angemerkt, dass der Winkelversatz Ω der vierten Keilscheibe 34 und die Winkellage α der zweiten Keilscheibe 22 voneinander unabhängig steuerbar sind, sodass der Kegelöffnungswinkel ϕ und der Schnittpunkt S der Kegelachse A mit der Umgebung 2 unabhängig voneinander gesteuert werden können.

Umfasst die Strahlablenkeinrichtung 19 - wie in der fünften Ausführungsform der Fig. 8a - alle vier Keilscheiben 21, 22, 31, 34, können gemäß den obigen Erläuterungen und der Darstellung in Fig. 8b Abtastmuster 9 mit beliebigem Durchmesser um durch den Kreisbogen 30 wählbare Schnittpunkte S der Kegelachse A mit der Umgebung 2 erzeugt werden.

In einer optionalen Variante der vierten oder fünften Ausführungsform hat die Steuereinheit 27 einen weiteren Signaleingang 37 für ein Messsignal M_{A}, welches den Abstand D des Laserscanners 13 zu der Umgebung 2 umfasst. Dabei ermittelt die Steuereinheit 27 aus dem Abstandsmesssignal M_{A} den Winkelversatz Ω, um diesen für das Steuern des vierten Antriebs 35 so vorzugeben, dass der Abstand D des Laserscanners 13 zu der Umgebung 2 kompensiert, d.h. die Umgebung 2 unabhängig von diesem Abstand D mit einem Abtastmuster 9 von gleichbleibendem Durchmesser bzw. mit konstanter Scanstreifenbreite B gescannt wird.

Das Abstandsmesssignal M_{A} wird z.B. aus der Laufzeit und der Aussenderichtung eines oder mehrerer vorhergehender, von der Umgebung 2 reflektierter Sendestrahlen 7 oder mithilfe eines separaten Abstandsmessgeräts ermittelt. Alternativ (oder ergänzend) kann das Abstandsmesssignal M_{A} in einer Recheneinheit 38 aus einem in einem Geländespeicher 39 gespeicherten - zumindest groben - Geländemodell der Umgebung 2 und einer mit einer Positionsmesseinheit 40 - z.B. mittels Satelliten - laufend ermittelten Fahrzeugposition errechnet werden. Die Recheneinheit 38, der Geländespeicher 39 und/oder die Positionsmesseinheit 40 sind dabei Teile des Laserscanners 13 oder des Fahrzeugs 1.

Es sei angemerkt, dass die erste, zweite, dritte und vierte Keilscheibe 21, 22, 31, 34 in beliebiger Reihenfolge in der Strahlablenkeinrichtung 19 und dabei koaxial oder nicht-koaxial zueinander angeordnet sein können. Ferner können die erste, zweite, dritte und vierte Keilscheibe 21, 22, 31, 34 verschieden stark optisch brechend sein, wenn gewünscht. Auch hat - entgegen den Darstellungen in den Fig. 3a bis 8a - nicht zwingend jede der Keilscheiben 21, 22, 31, 34 eine Seite mit einer zu ihrer Antriebsachse 24, 26, 33, 36 normalen Oberfläche.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Laserscanner zur fahrzeuggestützten Vermessung einer Umgebung (2) durch Laufzeitmessung unter Ermittlung eines 3D-Modells der Umgebung (2) aus Entfernungsmesspunkten, welcher Laserscanner (13) an einem Nick-, Roll- und Gierachsen (N, R, G) aufweisenden Fahrzeug (1) verankerbar ist und einen Lasersender (14) zum Aussenden eines Sendestrahls (7) im Wesentlichen quer zur Rollachse (R), einen Laserempfänger (15) zum Empfangen des von der Umgebung (2) reflektierten Sendestrahls (7) als Empfangsstrahl (10) und eine Strahlablenkeinrichtung (19) hat, welche eine erste und eine zweite optisch brechende Keilscheibe (21, 22) im Strahlengang (20) des Sende- und des Empfangsstrahls (7, 10), einen ersten und einen zweiten Antrieb (23, 25) und eine Steuereinheit (27) für die Antriebe (23, 25) umfasst, wobei die erste Keilscheibe (21) vom ersten Antrieb (23) um eine erste Antriebsachse (24) und die zweite Keilscheibe (22) vom zweiten Antrieb (25) um eine zweite Antriebsachse (26) antreibbar ist, wobei die Steuereinheit (27) einen Signaleingang (28) für ein Messsignal (Mₒ) über die Orientierung des Laserscanners (13) in der Umgebung (2) hat und dazu ausgebildet ist, aus dem Orientierungsmesssignal (Mₒ) den Rollwinkel (ρ) des Laserscanners (13) um die Rollachse (R) gegenüber der Horizontalen (6) zu ermitteln und den ersten und zweiten Antrieb (23, 25) derart zu steuern, dass die erste Keilscheibe (21) mit einer vorgegebenen Winkelgeschwindigkeit (ω) um die erste Antriebsachse (24) rotiert und die zweite Keilscheibe (22) in eine den ermittelten Rollwinkel (ρ) kompensierende Winkellage (α) um die zweite Antriebsachse (26) schwenkt.

2. Laserscanner nach Anspruch 1, **dadurch gekennzeichnet, dass** der Sendestrahl (7) vor Eintritt in die Strahlablenkeinrichtung (19) einen spitzen Winkel (γ) mit zumindest einer der Antriebsachsen (24, 26) einschließt.

3. Laserscanner nach Anspruch 1 oder 2, **dadurch gekennzeichnet, dass** die Antriebsachsen (24, 26) zusammenfallen.

4. Laserscanner nach einem der Ansprüche 1 bis 3, **dadurch gekennzeichnet, dass** die erste und die zweite Keilscheibe (21, 22) verschieden stark optisch brechend sind.

5. Laserscanner nach einem der Ansprüche 1 bis 4, **dadurch gekennzeichnet, dass** sich ein Winkelbereich (Δα), innerhalb dessen die zweite Keilscheibe (22) um die zweite Antriebsachse (26) schwenkbar ist, beiderseits einer vorgegebenen Nennwinkellage (α₀) der zweiten Keilscheibe (22) über jeweils weniger als 30 Grad, bevorzugt jeweils 15 Grad, erstreckt.

6. Laserscanner nach einem der Ansprüche 1 bis 5, **dadurch gekennzeichnet, dass** die Strahlablenkeinrichtung (19) im Strahlengang (20) ferner eine dritte optisch brechende Keilscheibe (31) umfasst, welche von einem dritten Antrieb (32) um eine dritte Antriebsachse (33) antreibbar ist, und die Steuereinheit (27) ferner dazu ausgebildet ist, aus dem Orientierungsmesssignal (Mₒ) den Nickwinkel des Laserscanners (13) um die Nickachse (N) gegenüber der Horizontalen (6) zu ermitteln und den dritten Antrieb (32) derart zu steuern, dass die dritte Keilscheibe (31) in eine den ermittelten Nickwinkel kompensierende Winkellage (β) um die dritte Antriebsachse (33) schwenkt.

7. Laserscanner nach Anspruch 6, **dadurch gekennzeichnet, dass** sich ein Winkelbereich (Δβ), innerhalb dessen die dritte Keilscheibe (31) um die dritte Antriebsachse (33) schwenkbar ist, beiderseits einer vorgegebenen Nennwinkellage (β₀) der dritten Keilscheibe (31) über jeweils weniger als 30 Grad, bevorzugt jeweils 15 Grad, erstreckt.

8. Laserscanner nach Anspruch 6 oder 7, **dadurch gekennzeichnet, dass** die Steuereinheit (27) ferner dazu ausgebildet ist, den dritten Antrieb (32) in Abhängigkeit von der Winkellage (α) der zweiten Keilscheibe (22) zu steuern.

9. Laserscanner nach einem der Ansprüche 1 bis 8, **dadurch gekennzeichnet, dass** die Strahlablenkeinrichtung (19) im Strahlengang (20) eine vierte optisch brechende Keilscheibe (34) umfasst, welche von einem vierten Antrieb (35) um eine vierte Antriebsachse (36) antreibbar ist, und die Steuereinheit (27) ferner dazu ausgebildet ist, den vierten Antrieb (35) derart zu steuern, dass die vierte Keilscheibe (34) unter einem vorgegebenen Winkelversatz (Ω) gegenüber der ersten Keilscheibe (21) mit der vorgegebenen Winkelgeschwindigkeit (ω) um die vierte Antriebsachse (36) rotiert.

10. Laserscanner nach Anspruch 9, **dadurch gekennzeichnet, dass** die Steuereinheit (27) einen weiteren Signaleingang (37) für ein Messsignal (M_{A}) über den Abstand (d) des Laserscanners (13) zu der Umgebung (2) hat und dazu ausgebildet ist, aus dem Abstandsmesssignal (M_{A}) den Winkelversatz (Ω) zu ermitteln und vorzugeben.

## Claims

1. Laser scanner for vehicle-borne surveying of an environment (2) by time-of-flight measurement and determination of a 3D-model of the environment (2) from distance measurement points, which laser scanner (13) can be anchored on a vehicle (1) having pitch, roll and yaw axes (N, R, G) and has a laser transmitter (14) for emitting a transmission beam (7) substantially transversely to the roll axis (R), a laser receiver (15) for receiving the transmission beam (7) reflected by the environment (2) as reception beam (10), and a beam deflection device (19) which comprises a first and a second optically refractive wedge disc (21, 22) in the beam path (20) of the transmission and the reception beam (7, 10), a first and a second drive (23, 25) and a control unit (27) for the drives (23, 25), wherein the first wedge disc (21) can be driven by the first drive (23) about a first driving axis (24) and the second wedge disc (22) can be driven by the second drive (25) about a second driving axis (26),
wherein the control unit (27) has a signal input (28) for a measurement signal (Mₒ) about the orientation of the laser scanner (13) in the environment (2) and is configured to determine from the orientation measurement signal (Mₒ) the roll angle (ρ) of the laser scanner (13) about the roll axis (R) with respect to the horizontal (6) and to control the first and second drive (23, 25) such that the first wedge disc (21) rotates about the first driving axis (24) at a predetermined angular velocity (ω) and the second wedge disc (22) pivots about the second driving axis (26) into an angular position (α) that compensates the roll angle (ρ) determined.

2. Laser scanner according to claim 1, **characterized in that** the transmission beam (7) encloses an acute angle (γ) with at least one of the driving axes (24, 26) before entering the beam deflection device (19).

3. Laser scanner according to claim 1 or 2, **characterized in that** the driving axes (24, 26) coincide.

4. Laser scanner according to any one of claims 1 to 3, **characterized in that** the first and the second wedge disc (21, 22) are optically reflective to a different degree.

5. Laser scanner according to any one of claims 1 to 4, **characterized in that** an angular range (Δα), within which the second wedge disc (22) can be pivoted about the second driving axis (26), extends on both sides of a predetermined nominal angular position (α₀) of the second wedge disc (22) over respectively less than 30 degrees, preferably respectively 15 degrees.

6. Laser scanner according to any one of claims 1 to 5, **characterized in that** the beam deflection device (19) further comprises, in the beam path (20), a third optically refractive wedge disc (31) which can be driven by a third drive (32) about a third driving axis (33), and the control unit (27) is further configured to determine from the orientation measurement signal (Mₒ) the pitch angle of the laser scanner (13) about the pitch axis (N) with respect to the horizontal (6) and to control the third drive (32) such that the third wedge disc (31) pivots about the third driving axis (33) into an angular position (β) that compensates the pitch angle determined.

7. Laser scanner according to claim 6, **characterized in that** an angular range (Δβ), within which the third wedge disc (31) can be pivoted about the third driving axis (33), extends on both sides of a predetermined nominal angular position (β₀) of the third wedge disc (31) over respectively less than 30 degrees, preferably respectively 15 degrees.

8. Laser scanner according to claim 6 or 7, **characterized in that** the control unit (27) is further configured to control the third drive (32) in dependence on the angular position (α) of the second wedge disc (22).

9. Laser scanner according to any one of claims 1 to 8, **characterized in that** the beam deflection device (19) comprises, in the beam path (20), a fourth optically refractive wedge disc (34) which can be driven by a fourth drive (35) about a fourth driving axis (36), and the control unit (27) is further configured to control the fourth drive (35) such that the fourth wedge disc (34) rotates about the fourth driving axis (36) with a predetermined angular offset (Ω) with respect to the first wedge disc (21) at a predetermined angular velocity (ω).

10. Laser scanner according to claim 9, **characterized in that** the control unit (27) has a further signal input (37) for a measurement signal (M_{A}) about the distance (d) of the laser scanner (13) to the environment (2) and is configured to determine and predetermine the angular offset (Ω) from the distance measurement signal (M_{A}).

## Revendications

1. Scanner laser pour le mesurage d'un environnement (2) depuis un véhicule par la mesure du temps de vol en détermination d'un modèle en 3D de l'environnement (2) à partir de points de mesure d'éloignement, lequel scanner laser (13) peut être ancré sur un véhicule (1) présentant des axes de tangage, de roulis et de lacet (N, R, G) et a un émetteur laser (14) pour émettre un faisceau d'émission (7) sensiblement de manière perpendiculaire par rapport à l'axe de roulis (R), un récepteur laser (15) pour la réception du faisceau d'émission (7) réfléchi par l'environnement (2) en tant que faisceau de réception (10), et un dispositif de déviation de faisceau (19), lequel comprend un premièr et un deuxième disque à clavette (21, 22) optiquement réfringent dans le trajet de faisceau (20) du faisceau d'émission et du faisceau de réception (7, 10), un premier et un deuxième entraînement (23, 25) et une unité de commande (27) pour les entraînements (23, 25), où le premièr disque à clavette (21) peut être entraîné par le premier entraînement (23) autour d'un premier axe d'entraînement (24) et le deuxième disque à clavette (22) peut être entraîné par le deuxième entraînement (25) autour d'un deuxième axe d'entraînement (26),
dans lequel l'unité de commande (27) a une entrée de signal (28) pour un signal de mesure (Mₒ) concernant l'orientation du scanner laser (13) dans l'environnement et est conçu pour déterminer l'angle de roulis (ρ) du scanner laser (13) autour de l'axe de roulis (R) par rapport à l'horizontale (6) à partir du signal de mesure d'orientation (Mₒ) et pour commander le premier et le deuxième entraînement (23, 25) de telle manière que le premièr disque à clavette (21) tourne avec une vitesse angulaire (ω) prédéfinie autour du premier axe d'entraînement (24) et le deuxième disque à clavette (22) pivote autour du deuxième axe d'entraînement (26) dans une position angulaire (α) qui compense l'angle de roulis (ρ) déterminé.

2. Scanner laser selon la revendication 1, **caractérisé en ce que** le faisceau d'émission (7), avant l'entrée dans le dispositif de déviation de faisceau (19), fait un angle aigu (γ) avec au moins un des axes d'entraînement (24, 26).

3. Scanner laser selon la revendication 1 ou 2, **caractérisé en ce que** les axes d'entraînement (24, 26) coincident.

4. Scanner laser selon l'une des revendications 1 à 3, **caractérisé en ce que** le premièr et le deuxième disque à clavette (21, 22) sont optiquement réfringents de manière différentement fort.

5. Scanner laser selon l'une des revendications 1 à 4, **caractérisé en ce qu'**une plage angulaire (Δα), à l'intérieur de laquelle le deuxième disque à clavette (22) peut pivoter autour du deuxième axe d'entraînement (26), s'étend des deux côtés d'une position angulaire nominale (α₀) du deuxième disque à clavette (22) sur respectivement moins de 30 degrés, de préférence, respectivement 15 degrés.

6. Scanner laser selon l'une des revendications 1 à 5, **caractérisé en ce que** le dispositif de déviation de faisceau (19) comprend en outre, dans le trajet de faisceau (20), un troisième disque à clavette (31) optiquement réfringent, lequel peut être entraîné autour d'un troisième axe d'entraînement (33) par un troisième entraînement (32), et l'unité de commande (27) est en outre conçue pour déterminer l'angle de tangage du scanner laser (13) autour de l'axe de tangage (N) par rapport à l'horizontale (6) à partir du signal d'orientation (Mₒ) et pour commander le troisième entraînement (32) de telle manière que le troisième disque à clavette (31) pivote autour du troisième axe d'entraînement (33) dans une position angulaire (β) qui compense l'angle de tangage déterminé.

7. Scanner laser selon la revendication 6, **caractérisé en ce qu'**une plage angulaire (Δβ), à l'intérieur de laquelle le troisième disque à clavette (31) peut pivoter autour du troisième axe d'entraînement (33), s'étend des deux côtés d'une position angulaire nominale (β₀) du troisième disque à clavette (31) sur respectivement moins de 30 degrés, de préférence respectivement 15 degrés.

8. Scanner laser selon la revendication 6 ou 7, **caractérisé en ce que** l'unité de commande (27) est en outre conçue pour commander le troisième entraînement (32) en fonction de la position angulaire (α) du deuxième disque à clavette (22).

9. Scanner laser selon l'une des revendications 1 à 8, **caractérisé en ce que** le dispositif de déviation de faisceau (19) comprend un quatrième disque à clavette (34) optiquement réfringent dans le trajet de faisceau (20), lequel peut être entraîné par un quatrième entraînement (35) autour d'un quatrième axe d'entraînement (36), et l'unité de commande (27) est en outre conçue pour commander le quatrième entraînement (35) de telle manière que le quatrième disque à clavette (34) tourne autour du quatrième axe d'entraînement (36) avec une vitesse angulaire (ω) prédéfinie avec un décalage angulaire (Ω) prédéfini par rapport au premièr disque à clavette (21).

10. Scanner laser selon la revendication 9, **caractérisé en ce que** l'unité de commande (27) a une autre entrée de signal (37) pour un signal de mesure (M_{A}) concernant la distance (d) du scanner laser (13) jusqu'à l'environnement (2) et est conçue pour déterminer et prédéfinir le décalage angulaire (Ω) à partir du signal de mesure de distance (M_{A}).
